(19) 

Europäisches
Patentamt
European
Patent Office
Office européen
des brevets

(11) **EP 3 048 698 B1**

(12) **EUROPEAN PATENT SPECIFICATION**

(45) Date of publication and mention
of the grant of the patent:
**08.01.2020  Bulletin 2020/02**

(51) Int Cl.:
*H02J 13/00* *(2006.01)*   *H02J 3/00* *(2006.01)*
*H02H 1/00* *(2006.01)*   *H02H 7/22* *(2006.01)*

(21) Application number: **14866272.9**

(22) Date of filing: **19.06.2014**

(86) International application number:
**PCT/CN2014/080290**

(87) International publication number:
**WO 2015/078172 (04.06.2015 Gazette 2015/22)**

(54) **METHOD FOR MULTI-FAULT POWER RESTORATION OF POWER DISTRIBUTION NETWORK**

VERFAHREN ZUR MEHRFACHFEHLER-STROMWIEDERHERSTELLUNG EINES
STROMVERSORGUNGSNETZES

PROCÉDÉ DE RÉTABLISSEMENT DE DÉFAILLANCES MULTIPLES DE COURANT D'UN RÉSEAU
DE DISTRIBUTION D'ÉLECTRICITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **28.11.2013   CN 201310625280**

(43) Date of publication of application:
**27.07.2016   Bulletin 2016/30**

(73) Proprietors:
 • **State Grid Corporation of China (SGCC)
   Beijing 100031 (CN)**
 • **Laiwu Power Supply Company Of State Grid
   Shandong
   Laiwu, Shandong 271100 (CN)**

(72) Inventors:
 • **ZHU, Guofang
   Jinan, Shandong 250061 (CN)**
 • **LI, Hongmei
   Jinan, Shandong 250001 (CN)**
 • **NIU, Jincang
   Jinan, Shandong 250001 (CN)**
 • **ZHAO, Baoguang
   Laiwu, Shandong 271100 (CN)**
 • **LI, Shangzhen
   Laiwu, Shandong 271100 (CN)**
 • **SHI, Xin
   Jinan, Shandong 250001 (CN)**
 • **LI, Yong
   Jinan, Shandong 250001 (CN)**
 • **LIU, Xujie
   Laiwu, Shandong 271100 (CN)**
 • **WU, Guanbin
   Jinan, Shandong 250001 (CN)**
 • **XU, Naiyuan
   Jinan, Shandong 250001 (CN)**
 • **LI, Sun
   Jinan, Shandong 250001 (CN)**
 • **LIANG, Yuanbin
   Laiwu, Shandong 271100 (CN)**

(74) Representative: **2K Patentanwälte Blasberg
Kewitz & Reichel
Partnerschaft mbB
Schumannstrasse 27
60325 Frankfurt am Main (DE)**

(56) References cited:
**CN-A- 102 509 153     CN-A- 103 259 261
CN-A- 103 593 708      US-A- 5 928 368**

 • **LIM ET AL: "Service Restoration Methodology for
   Multiple Fault Case in Distribution Systems",
   IEEE TRANSACTIONS ON POWER SYSTEMS,
   IEEE SERVICE CENTER, PISCATAWAY, NJ, US,
   vol. 21, no. 4, 1 November 2006 (2006-11-01),
   pages 1638-1644, XP011149785, ISSN: 0885-8950,
   DOI: 10.1109/TPWRS.2006.879275**

**(Cont. next page)**

EP 3 048 698 B1

- **LIM, SEONG-11 ET AL.: 'Service Restoration Methodology for Multiple Fault Case in Distribution Systems' IEEE TRANSACTIONS ON POWER SYSTEMS vol. 21, no. 4, 01 November 2006, pages 1638 - 1644, XP011149785 DOI: 10.1109/TPWRS.2006.879275**

## Description

## Field of the Invention

The present invention relates to the field of feeder automation, in particular to a power restoration method for a power distribution network with multi-faults.

## Background of the Invention

Fault restoration of a power distribution network plays an important role in ensuring the safety and the economical efficiency of a power grid, and is accordingly a problem focused by power systems all the time. The fault restoration of the power distribution network is a multi-target nonlinear constraint problem, and is mainly solved by an artificial intelligence algorithm and a heuristic search algorithm. Although a relative optimum restoration path may be found finally by the artificial intelligence algorithm, the calculation quantity is large, and the requirement for real-time performance is difficult to meet, while compared with the artificial intelligence algorithm, the heuristic search algorithm has the advantages of high search speed, good real-time performance and the like. So in practical application, the heuristic search algorithm is most widely applied. Although there have been many fault restoration methods for power distribution networks, these methods are only suitable for solving the single-fault problem, whereas multi-faults may appear in practical operation of a power grid under the following three conditions: (1) severe weather, e.g. rainstorm, snowstorm and typhoon; (2) destructive human-made disasters, e.g. substation fire caused by forest fire and the like; and (3) overload operation of most lines during power utilization peak in summer.

When a power distribution network is in a condition with multiple faults, the existing single-fault restoration strategy can not accomplish power restoration of non-fault power loss areas subjected to multi-faults. After the power distribution network has multiple faults, the power restoration of the fault restoration areas subjected to a single fault may influence each other under the following two conditions: under the first condition, the fault restoration areas subjected to a single fault are connected by a tie switch; under such a condition, in view of the physical structure, the power restoration line connected with one fault restoration area may provide spare capacity for another fault restoration area; however, when the fault restoration of the two fault restoration areas is solved by using a traditional method, the power restoration line connected with the one fault restoration area can not provide spare capacity for the another fault restoration area, so that the power restoration line can not be sufficiently utilized, and the final power restoration solution is not optimal. Under the second condition, two fault restoration areas subjected to single-fault are connected by two tie switches; under such a condition, a common power restoration line exists between the two fault restoration areas; if power restoration of the two fault restoration areas is simultaneously performed by using a traditional single-fault restoration algorithm, the spare capacity of the common power restoration line may be reused, so that the power restoration solution can not meet the expected requirement and even can not be executed due to overload of the common power restoration line.

The article LIM ET AL: "Service Restoration Methodology for Multiple Fault Case in Distribution Systems",IEEE TRANSACTIONS ON POWER SYSTEMS, IEEE SERVICE CENTER, PISCATAWAY, NJ, US, vol. 21, no. 4, 1 November 2006 (2006-11-01), pages 1638-1644, XP011149785,ISSN: 0885-8950, DOI: 10.1109/TPWRS.2006.879275 shows a method for restoring a power distribution network after single and multiple faults occurred. It is concerned with planning the restoration of defined fault areas, in particular to calculate the order of restoring these areas by means of calculating a Restoration Possibility Index (RPI) for each area using fuzzy theory.

## Summary of the Invention

The object of the present invention is to provide a power restoration method for a power distribution network subjected to multi-fault for solving the above problems, including: performing multi-fault judgment on multiple faults not completely processed, to form a plurality of multi-faults and a plurality of single-faults; then performing independent fault restoration area division on the multi-faults, and performing power restoration on the independent fault restoration areas one by one; and after the multiple faults are processed, performing power restoration on each single fault.

To fulfill the above object, the present invention adopts the following technical solution:

A multi-fault fault restoration method for a power distribution network, comprising the following plurality of steps:

(1) stopping executing an original fault processing strategy not completely executed;
(2) turning on outlet circuit breakers for fault lines;
(3) re-dividing independent fault restoration areas: if some fault restoration areas subjected to a single fault are connected by a tie switch and these fault restoration areas subjected to a single fault are connected with the remaining fault restoration areas subjected to a single fault by at least one power restoration line, regarding these fault restoration areas subjected to a single fault as a whole, and calling them as independent fault restoration areas;
(4) determining common power restoration lines and independent power restoration lines for the independent fault restoration areas;

(5) re-determining multi-faults;
(6) performing multi-fault power restoration;
(7) forming a power restoration solution for the fault restoration areas subjected to single-fault by using a single-fault restoration method, wherein if the power distribution network has only one fault, this fault is a single-fault, the single-fault restoration algorithm is a traditional fault restoration algorithm when the power distribution network has only one fault.

In step (3), the specific method for re-dividing independent fault restoration areas is as follows: after a new fault occurs, the downstream of the new fault line becomes a new fault restoration area; if there are independent fault restoration areas connected with the new fault restoration area by a tie switch, these independent fault restoration areas and the new fault restoration areas form new independent fault restoration areas.

In step (4), the independent power restoration lines are defined as follows: if a certain power restoration line for multi-fault restoration areas can only supply power to an independent fault restoration area, the power line is an independent power restoration line for the independent fault restoration area; the common power restoration lines are defined as follows: if a certain power restoration line can supply power to a plurality of independent fault restoration area, the power line is a common power restoration line for these independent fault restoration area.

Step (5) specifically includes the following steps:

(5-1) randomly selecting one independent fault restoration area, finding all common power restoration lines for the independent fault restoration area, then finding independent fault restoration areas connected with the common power restoration lines, setting these independent fault restoration areas as a first layer of independent fault restoration areas, and randomly sequencing the independent fault restoration areas;

(5-2) selecting each independent fault restoration area in the layer in sequence, and further finding the common power restoration lines connected with the first layer of independent fault restoration areas and independent fault restoration areas connected with the common power restoration lines to form a second layer of independent fault restoration areas; selecting each independent fault restoration area in the layer in sequence, and forming the second layer of independent fault restoration areas according to the method for forming the first layer of independent fault restoration areas;

(5-3) proceeding by following the same principle, wherein after limited steps, faults involved in all the layers of independent fault restoration areas form multi-faults.

Step (6) specifically includes the following steps:

(6-1) calculating spare coefficients: calculating a spare coefficient for each independent fault restoration area in the absence of a common power restoration line according to the calculation formula

$$S\% = \frac{S'}{S} \times 100\%$$ wherein S is the power loss load of the independent fault restoration area, and S' is the sum of the spare capacity of the independent power restoration lines for supplying power to the independent fault restoration area;

(6-2) performing power restoration on the independent fault restoration areas one by one according to the spare coefficients from big to small.

Step (6-2) includes the following specific steps:

(a) performing power restoration on the independent fault restoration areas by using independent power restoration lines: when power restoration is performed on a certain independent fault restoration area, if the power supply to all the power loss loads is restored, the common power restoration line does not participate in the power restoration of the fault restoration areas any more; if the power supply to all the power loss loads can not be restored, a common power restoration line with the largest spare capacity is added for new power restoration; if the power supply to all the power loss loads still can not be restored, a common power restoration line is further added, till all the power loss loads are restored or no common power restoration line exists;

(b) transforming the common power restoration lines: after the power restoration of a certain independent fault restoration area is completed, if some common power restoration lines connected with the certain independent fault restoration area only supply power to an independent fault restoration area, these common power restoration lines are transformed into corresponding independent power restoration lines for the independent fault restoration area; and if the load rate of the part of the common power restoration lines connected with the certain independent fault restoration area is greater than the spare coefficient of the to-be-restored independent fault restoration areas connected with these common power restoration lines, the part of the common power restoration lines do not participate in the power restoration of the to-be-restored independent fault restoration areas any more.

The present invention has the following advantages:

1. independent fault restoration area division is performed on the multi-faults, and power restoration is performed on the independent fault restoration areas one by one, so that reuse of the common power restoration lines is avoided;

2. the power restoration lines are sufficiently utilized, and the power restoration result is optimized;

3. power restoration can be performed on multiple fault restoration areas simultaneously, so that the power restoration efficiency is greatly improved, thus contributing to the real-time performance of power restoration.

## Brief Description of the Drawings

Fig. 1 is a flow diagram of the present invention;
Fig. 2 is a structure diagram of a power distribution network of the present invention; in which: A-I represent power lines; 12, 17, 24 and 34 represent section switches; and 7, 19, 25 and 32 represent tie switches.

## Detailed Description of the Embodiments

The present invention will be further described below in combination with the accompanying drawings and the embodiments.

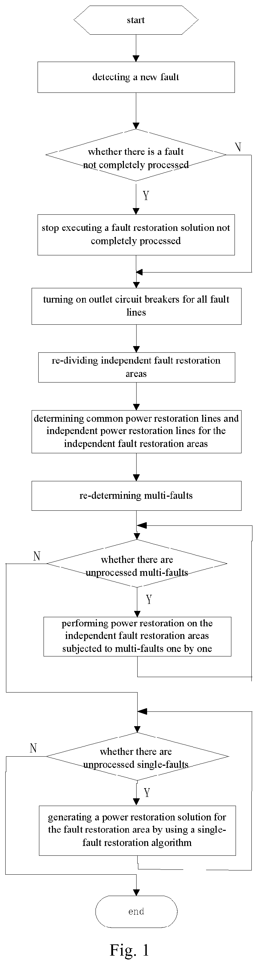

As shown in Fig. 1, a power restoration method for a power distribution network with multi-faults specifically comprises the following steps:

(1) after the power distribution network has a new fault, stopping executing an original fault processing strategy not completely executed;

(2) turning on outlet circuit breakers for all fault lines;

(3) re-dividing independent fault restoration areas: after the new fault occurs, the downstream of the new fault line becomes a new fault restoration area; if there are independent fault restoration areas connected with the new fault restoration area by a tie switch, these independent fault restoration areas and the new fault restoration area form new independent fault restoration areas;

(4) determining common power restoration lines and independent power restoration lines for the independent fault restoration areas: if a certain power restoration line for multi-fault restoration areas can only supply power to an independent fault restoration area, the power line is an independent power restoration line for the independent fault restoration area; if a certain power restoration line can supply power to multiple independent fault restoration areas, the power line is a common power restoration line for these independent fault restoration areas; after the new fault occurs, the common power restoration line and the independent power restoration line are changed, so the common power restoration line and the independent power restoration line for the independent fault restoration areas should be re-determined according to the above definition;

(5) re-determining multi-faults: randomly selecting one independent fault restoration area, adding all common power restoration lines for supplying power to the independent fault restoration area and independent fault restoration areas connected with the common power restoration lines, setting the new independent fault restoration areas added at this stage as a first layer of independent fault restoration areas, and randomly sequencing the independent fault restoration areas; next, accessing each independent fault restoration area in the layer in sequence, and further adding the common power restoration lines connected with the first layer of independent fault restoration areas and independent fault restoration areas connected with the common power restoration lines to form a second layer of independent fault restoration areas; proceeding by following the same principle, and completing the search after limited steps, wherein faults involved in all the found independent fault restoration areas form multi-faults;

(6) performing power restoration on the independent fault restoration areas subjected to multi-faults one by one according to the ratio of the spare capacity of the independent power restoration lines for the independent fault restoration areas to the power loss loads of the independent fault restoration areas: first, calculating a spare coefficient for each independent fault restoration area in the absence of a common power restoration line according to the calculation

formula $S\% = \dfrac{S'}{S} \times 100\%$ wherein S expresses the power loss load of the independent fault restoration area, and S' expresses the sum of the spare capacity of the independent power restoration lines for supplying power to the independent fault restoration area; second, performing power restoration on the independent fault restoration areas one by one according to the spare coefficients from big to small: when power restoration is performed on a certain independent fault restoration area, an independent power restoration line is firstly utilized to perform power restoration on the independent fault restoration area; if the power supply to all the power loss loads can be restored, the common power restoration line does not participate in the power restoration of the power restoration area any more; if the power supply to all the power loss loads can not be restored, a common power restoration line with the largest spare capacity is added for new power restoration; if the power supply to all the power loss loads still can not be restored, a common power restoration line is further added, till all the power loss loads are restored or no common power restoration line exists; after the power restoration of the certain independent fault restoration area is completed, if a part of common power restoration lines connected with the certain independent fault restoration area only supply power to an independent fault restoration area, this part of common power restoration lines are transformed into corresponding independent power restoration lines for the independent fault restoration area; and if the load rate of some common power restoration lines connected with the certain independent fault restoration area reaches a very high level, such common power restoration lines are directly removed and they do not participate in subsequent power restoration any more;

(7) forming a power restoration solution for the fault restoration areas subjected to single-fault by using a single-fault restoration method.

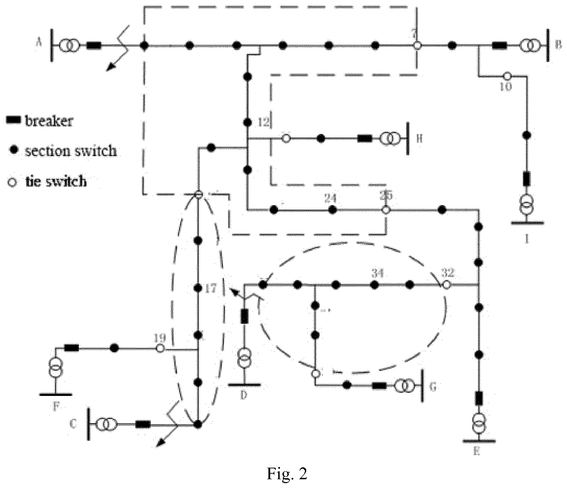

As shown in Fig. 2, it is supposed that before a power line D fails within short time, power lines A and C have already failed, and a fault restoration strategy has not been completely executed; the fault restoration area of the power line D is restored by using an original single-fault restoration strategy; because a power line E needs to perform power restoration on the fault restoration area of the power line A, two fault restoration areas subjected to single-fault are connected by two tie switches; under such a condition, a common power restoration line is provided between the two fault restoration areas; if power restoration is simultaneously performed on the two fault restoration areas by using a traditional single-fault restoration algorithm, the spare capacity of the common power restoration line is reused, so that the fault restoration solution can not meet the expected requirement, e.g. there are two fault restoration areas A and C in the figure, a common power line E is provided between the two fault restoration areas, and when the power restoration is performed by using the single-fault restoration strategy, in the fault restoration solution of the fault restoration area A, the calculated load of the common power line E is the sum of the actual load of the common power line E before power restoration and the power loss load of the restored fault restoration area A restored by the common power line E; in the fault restoration solution of the fault restoration area C, the calculated load of the common power line E is the sum of the actual load of the common power line E before power restoration and the power loss load of the fault restoration area C restored by the common power line E; the actual load of the common power line E is the sum of the actual load of the common power line E before power restoration, the power loss load of the restored fault restoration area A and the power loss load of the restored fault restoration area C; and the spare capacity of the common power line E is reused, so that the final fault restoration solution can not meet the requirement, and even the fault restoration solution can not be executed due to overload of the common power line E.

However, such problems can be solved by using the method proposed by the present application.

First, the original fault processing strategy not completely executed is stopped, and the outlet circuit breakers for the fault lines are turned on. It could be known according to the method of step 3 that, the fault restoration areas of the power lines A and C form an independent fault restoration area 1, and the fault restoration area of the power line E forms an independent fault restoration area 2. It could be known according to the method of step 4 that, the power lines B, F and H are independent power restoration lines for the independent fault restoration area 1, and the power line G is an independent power restoration line for the independent fault restoration area 2. The power line E is a common power restoration line for the two independent fault restoration areas. It could be known according to the method of step 5 that, three faults form a multi-fault, and the fault restoration area subjected to the multi-fault consists of two independent fault restoration areas. Power restoration is performed on the multi-fault according to the method of step 6, and the final fault restoration solution is as follows: turning on the tie switch 15, turning off section switches 12, 17, 24 and 34, and turning on tie switches 7, 19, 25 and 32.

It could be seen from the final fault restoration solution that the power restoration line H originally supplying power to the fault restoration area of the power line A provides spare capacity for the fault restoration area of the power line C, so the result is optimized. Reuse of the common power restoration lines is avoided by performing power restoration on the independent fault restoration areas subjected to multi-fault one by one. If multiple faults are divided into a plurality of multi-faults, the power restoration may be simultaneously performed on the multi-fault restoration areas, thus contributing to the real-time performance of the fault restoration.

**Claims**

1. A power restoration method for a power distribution network with multi-faults, comprising the following steps:

   1) after the power distribution network has a new fault, stopping executing an original fault processing strategy not completely executed;
   2) turning on branch circuit breaker for lines where a fault occurs;
   3) re-dividing independent fault restoration areas: if some fault restoration areas subjected to a single fault are connected by a tie switch and these fault restoration areas subjected to a single fault are connected with the remaining fault restoration areas subjected to a single fault by at least one power restoration line, then regarding these fault restoration areas subjected to a single fault as a whole, and calling them as independent fault restoration areas;

4) determining common power restoration lines and independent power restoration lines for the independent fault restoration areas;

wherein in step 4), the independent power restoration lines are defined as follows: if a certain power restoration line for fault restoration areas subjected to multi-faults can only supply power to an independent fault restoration area, the power line is an independent power restoration line for the independent fault restoration area; the common power restoration lines are defined as follows: if a certain power restoration line can supply power to a plurality of independent fault restoration areas, the power line is a common power restoration line for these independent fault restoration areas

5) re-determining multi-faults;

wherein step 5) specifically comprises the following steps:

5-1) randomly selecting one independent fault restoration area, finding all common power restoration lines for the independent fault restoration area, then finding independent fault restoration areas connected with the common power restoration lines, setting these independent fault restoration areas as a first layer of independent fault restoration areas, and randomly sequencing the independent fault restoration areas;

5-2) selecting each independent fault restoration area on the first layer of independent fault restoration areas in sequence, and further finding the common power restoration lines connected with the first layer of independent fault restoration areas and independent fault restoration areas connected with the common power restoration lines to form a second layer of independent fault restoration areas; selecting each independent fault restoration area on the second layer of independent fault restoration areas in sequence, and forming the second layer of independent fault restoration areas according to the method for forming the first layer of independent fault restoration areas;

5-3) proceeding by following the same principle, wherein after a limited number of steps, faults involved in the independent fault restoration areas of all the layers form multi-faults

6) performing multi-fault power restoration;

wherein step 6) specifically comprises the following steps:

6-1) calculating spare coefficients: calculating a spare coefficient for each independent fault restoration area in the absence of a common power restoration line according to a formula $S\% = \dfrac{S'}{S} \times 100\%$,

wherein S is the power loss load of the independent fault restoration area, and S' is the sum of the spare capacity of the independent power restoration lines for supplying power to the independent fault restoration area;

6-2) performing power restoration on the independent fault restoration areas one by one according to the spare coefficients from large to small

7) forming a power restoration for the fault restoration areas subjected to single-fault by using a single-fault restoration method,

2. The power restoration method for the power distribution network with multi-faults of claim 1, wherein in step 3), the specific method for re-dividing independent fault restoration areas is as follows: after a new fault occurs, the downstream of the new fault line becomes a new fault restoration area; if there are independent fault restoration areas connected with the new fault restoration area by a tie switch, these independent fault restoration areas and the new fault restoration area form new independent fault restoration areas.

3. The power restoration method for the power distribution network with multi-faults of claim 1, wherein step 6-2) comprises the following specific steps:

a) performing power restoration on the independent fault restoration areas by using independent power restoration lines; when power restoration is performed on a certain independent fault restoration area, if the power supply to all the power loss loads is restored, the common power restoration line does not participate in the power restoration of the fault restoration areas any more; if the power supply to all the power loss loads can not be restored, a common power restoration line with the largest spare capacity is added for new power restoration; if the power supply to all the power loss loads still can not be restored, a common power restoration line is further added, till all the power loss loads are restored or no common power restoration line exists;

b) transforming the common power restoration lines: after the power restoration of a certain independent fault restoration area is completed, if some common power restoration lines connected with the certain independent fault restoration area only supply power to an independent fault restoration area, these common power restoration lines are transformed into corresponding independent power restoration lines for the independent fault restoration area; and if the load rate of the part of the common power restoration lines connected with the certain independent fault restoration area is greater than the spare coefficient of the to-be-restored independent fault restoration areas connected with these common power restoration lines, the part of the common power restoration lines do not participate in the power restoration of the to-be-restored independent fault restoration areas any more.

**Patentansprüche**

1. Verfahren zur Wiederherstellung der Stromversorgung für ein Stromverteilungsnetz mit Mehrfachfehlern, mit den folgenden Schritten:

   1) nachdem das Stromverteilungsnetz einen neuen Fehler aufweist, Abbrechen des Ausführens einer ursprünglichen Fehlerverarbeitungsstrategie, die nicht vollständig ausgeführt wurde;
   2) Einschalten eines Verzweigungsschaltungsunterbrechers für Leitungen, bei denen ein Fehler auftritt;
   3) Neuaufteilung von unabhängigen Fehlerbehebungsbereichen: wenn einige einem Einzelfehler ausgesetzte Fehlerbehebungsbereiche durch einen Verbindungsschalter durch mindestens eine Stromwiederherstellungsleitung verbunden sind und diese einem Einzelfehler ausgesetzte Fehlerbehebungsbereiche mit den verbleibenden Fehlerbehebungsbereichen verbunden sind, die einem Einzelfehler ausgesetzt sind, dann werden diese als Ganzes als einem Einzelfehler ausgesetzte Fehlerbehebungsbereiche betrachtet und als unabhängige Fehlerbehebungsbereiche indiziert;
   4) Bestimmen von gemeinsamen Stromwiederherstellungsleitungen und von unabhängigen Stromwiederherstellungsleitungen für die unabhängigen Fehlerbehebungsbereiche;
   wobei in dem Schritt 4) die unabhängigen Stromwiederherstellungsleitungen wie folgt definiert sind: wenn eine bestimmte Stromwiederherstellungsleitung für Fehlerbehebungsbereiche, die Mehrfachfehlern ausgesetzt sind, nur einen unabhängigen Fehlerbehebungsbereich mit Strom versorgen kann, ist die Stromleitung eine unabhängige Stromwiederherstellungsleitung für den unabhängigen Fehlerbehebungsbereich; die gemeinsamen Stromwiederherstellungsleitungen wie folgt definiert sind: wenn eine bestimmte Stromwiederherstellungsleitung eine Mehrzahl von unabhängigen Fehlerbehebungsbereichen mit Strom versorgen kann, ist die Stromleitung eine gemeinsame Stromwiederherstellungsleitung für diese unabhängigen Fehlerbehebungsbereiche.
   5) erneute Bestimmung von Mehrfachfehlern; wobei der Schritt 5) besonders die folgenden Schritte umfasst:

   5-1) zufälliges Auswählen eines unabhängigen Fehlerbehebungsbereichs, Auffinden von sämtlichen gemeinsamen Stromwiederherstellungsleitungen für den unabhängigen Fehlerbehebungsbereich, dann Auffinden von unabhängigen Fehlerbehebungsbereichen, die mit den gemeinsamen Stromwiederherstellungsleitungen verbunden sind, Festlegen dieser unabhängigen Fehlerbehebungsbereiche als eine erste Schicht von unabhängigen Fehlerbehebungsbereichen und zufälliges Sequenzieren der unabhängigen Fehlerbehebungsbereiche;
   5-2) Auswählen jedes unabhängigen Fehlerbehebungsbereichs auf der ersten Schicht von unabhängigen Fehlerbehebungsbereichen in Folge, und weiterhin Auffinden der gemeinsamen Stromwiederherstellungsleitungen, die mit der ersten Schicht von unabhängigen Fehlerbehebungsbereichen verbunden sind, und von unabhängigen Fehlerbehebungsbereichen, die mit den gemeinsamen Stromwiederherstellungsleitungen verbunden sind, um eine zweite Schicht von unabhängigen Fehlerbehebungsbereichen zu bilden; Auswählen jedes unabhängigen Fehlerbehebungsbereichs auf der zweiten Schicht von unabhängigen Fehlerbehebungsbereichen in Folge, und Bilden der zweiten Schicht von unabhängigen Fehlerbehebungsbereichen entsprechend dem Verfahren zum Bilden der ersten Schicht von unabhängigen Fehlerbehebungsbereichen;
   5-3) weiteres Fortfahren nach dem gleichen Prinzip, wobei nach einer begrenzten Anzahl von Schritten Fehler, die in den unabhängigen Fehlerbehebungsbereichen von sämtlichen Schichten beteiligt sind, Mehrfachfehler bilden.

   6) Durchführen der Wiederherstellung der Stromversorgung mit Mehrfachfehlern;

wobei der Schritt 6) besonders die folgenden Schritte umfasst:

6-1) Berechnen von Reservekoeffizienten: Berechnen eines Reservekoeffizienten für jeden unabhängigen Fehlerbehebungsbereich in Abwesenheit einer gemeinsamen Stromwiederherstellungsleitung gemäß einer Formel $S\% = \dfrac{S'}{S} \times 100\%$ wobei S, die Verlustleistungslast des unabhängigen Fehlerbehebungsbereichs darstellt und S' die Summe der freien Kapazität der unabhängigen Stromwiederherstellungsleitungen zur Stromversorgung des unabhängigen Fehlerbehebungsbereichs darstellt;

6-2) Durchführen der Stromwiederherstellung an den unabhängigen Fehlerbehebungsbereichen nacheinander entsprechend den Reservekoeffizienten von groß nach klein.

7) Bilden einer Stromwiederherstellung für die Fehlerbehebungsbereiche, die einem Einzelfehler ausgesetzt sind, unter Verwendung eines Verfahrens zur Wiederherstellung eines Einzelfehlers.

2. Verfahren zur Wiederherstellung der Stromversorgung für das Stromverteilungsnetz mit Mehrfachfehlern nach Anspruch 1, wobei in dem Schritt 3) das spezifische Verfahren zur Neuaufteilung von unabhängigen Fehlerbehebungsbereichen wie folgt ist: nach dem Auftreten eines neuen Fehlers wird der stromabwärts der neuen Fehlerlinie befindliche Bereich zu einem neuen Fehlerbehebungsbereich; wenn es unabhängige Fehlerbehebungsbereiche gibt, die über einen Verbindungsschalter mit dem neuen Fehlerbehebungsbereich verbunden sind, bilden diese unabhängigen Fehlerbehebungsbereiche und der neue Fehlerbehebungsbereich neue unabhängige Fehlerbehebungsbereiche.

3. Verfahren zur Wiederherstellung der Stromversorgung für das Stromverteilungsnetz mit Mehrfachfehlern nach Anspruch 1, wobei der Schritt 6-2) die folgenden besonderen Schritte umfasst:

a) Durchführen der Stromwiederherstellung an den unabhängigen Fehlerbehebungsbereichen unter Verwendung von unabhängigen Stromwiederherstellungsleitungen: wenn die Stromwiederherstellung in einem bestimmten unabhängigen Fehlerbehebungsbereich durchgeführt wird, falls die Stromversorgung von sämtlichen Verlustleistungslasten wiederhergestellt wird, nimmt die gemeinsame Stromwiederherstellungsleitung nicht mehr an der Stromwiederherstellung der Fehlerbehebungsbereiche teil; wenn die Stromversorgung von sämtlichen Verlustleistungslasten nicht wiederhergestellt werden kann, wird eine gemeinsame Stromwiederherstellungsleitung mit der größten Reservekapazität für die neue Stromwiederherstellung hinzugefügt; wenn die Stromversorgung von sämtlichen Verlustleistungslasten immer noch nicht wiederhergestellt werden kann, wird eine gemeinsame Stromwiederherstellungsleitung hinzugefügt, bis sämtliche Verlustleistungslasten wiederhergestellt sind oder keine gemeinsame Stromwiederherstellungsleitung vorhanden ist;

b) Transformieren der gemeinsamen Stromwiederherstellungsleitungen: wenn nach Abschluss der Stromwiederherstellung eines bestimmten unabhängigen Fehlerbehebungsbereichs einige gemeinsame Stromwiederherstellungsleitungen, die mit dem bestimmten unabhängigen Fehlerbehebungsbereich verbunden sind, nur einen unabhängigen Fehlerbehebungsbereich mit Strom versorgen, werden diese gemeinsamen Stromwiederherstellungsleitungen in entsprechende unabhängige Stromwiederherstellungsleitungen für den unabhängigen Fehlerbehebungsbereich transformiert; und wenn die Auslastung des Teils der gemeinsamen Stromwiederherstellungsleitungen, der mit dem bestimmten unabhängigen Fehlerbehebungsbereich verbunden ist, größer ist als der Reservekoeffizient der wiederherzustellenden unabhängigen Fehlerbehebungsbereiche, die mit diesen gemeinsamen Stromwiederherstellungsleitungen verbunden sind, nimmt der Teil der gemeinsamen Stromwiederherstellungsleitungen nicht mehr an der Stromwiederherstellung der wiederherzustellenden unabhängigen Fehlerbehebungsbereiche teil.

**Revendications**

1. Procédé de rétablissement de puissance pour un réseau de distribution de puissance ayant de multiples défaillances, comprenant les étapes suivantes :

1) après que le réseau de distribution de puissance présente une nouvelle défaillance, arrêter l'exécution d'une stratégie de traitement de défaillance d'origine non complètement exécutée ;

2) mettre en marche un disjoncteur de dérivation pour des lignes où une défaillance produit ;

3) diviser à nouveau des zones de rétablissement sur défaillance indépendantes ; si certaines zones de rétablissement sur défaillance soumises à une unique défaillance sont connectées par un commutateur de sectionnement et que ces zones de rétablissement sur défaillance soumises à une unique défaillance sont connectées aux zones de rétablissement sur défaillance restantes soumises à une unique défaillance par au moins une ligne de rétablissement de puissance, alors considérer comme un tout ces zones de rétablissement sur défaillance soumises à une unique défaillance, et appeler celles-ci comme des zones de rétablissement sur défaillance indépendantes ;

4) déterminer des lignes de rétablissement de puissance communes et des lignes de rétablissement de puissance indépendantes pour les zones de rétablissement sur défaillance indépendantes ;

dans lequel, à l'étape 4), les lignes de rétablissement de puissance indépendantes sont définies comme suit : si une certaine ligne de rétablissement de puissance pour des zones de rétablissement sur défaillance soumises à de multiples défaillances peut uniquement fournir de la puissance à une zone de rétablissement sur défaillance indépendante, la ligne de puissance est une ligne de rétablissement de puissance indépendante pour la zone de rétablissement sur défaillance indépendante ; les lignes de rétablissement de puissance communes sont définies comme suit : si une certaine ligne de rétablissement de puissance peut fournir de la puissance à une pluralité de zones de rétablissement sur défaillance indépendantes, la ligne de puissance est une ligne de rétablissement de puissance commune pour ces zones de rétablissement sur défaillance indépendantes ;

5) déterminer à nouveau de multiples défaillances ;

dans lequel l'étape 5) comprend spécifiquement les étapes suivantes :

5-1) sélectionner de façon aléatoire une zone de rétablissement sur défaillance indépendante, trouver toutes les lignes de rétablissement de puissance communes pour la zone de rétablissement sur défaillance indépendante, puis trouver des zones de rétablissement sur défaillance indépendantes connectées aux lignes de rétablissement de puissance communes, régler ces zones de rétablissement sur défaillance indépendantes comme une première couche de zones de rétablissement sur défaillance indépendantes, et ordonner de façon aléatoire les zones de rétablissement sur défaillance indépendantes ;

5-2) sélectionner chaque zone de rétablissement sur défaillance indépendante sur la première couche de zones de rétablissement sur défaillance indépendantes en séquence, et en outre trouver les lignes de rétablissement de puissance communes connectées à la première couche de zones de rétablissement sur défaillance indépendantes et des zones de rétablissement sur défaillance indépendantes connectées aux lignes de rétablissement de puissance communes pour former une seconde couche de zones de rétablissement sur défaillance indépendantes ; sélectionner chaque zone de rétablissement sur défaillance indépendante sur la seconde couche de zones de rétablissement sur défaillance indépendantes en séquence, et former la seconde couche de zones de rétablissement sur défaillance indépendantes selon le procédé de formation de la première couche de zones de rétablissement sur défaillance indépendantes ;

5-3) poursuivre en suivant le même principe, dans lequel, après un nombre limité d'étapes, des défaillances impliquées dans les zones de rétablissement sur défaillance indépendantes de toutes les couches forment de multiples défaillances ;

6) réaliser un rétablissement de puissance multi-défaillance ;

dans lequel l'étape 6) comprend spécifiquement les étapes suivantes :

6-1) calculer des coefficients de réserve : calculer un coefficient de réserve pour chaque zone de rétablissement sur défaillance indépendante en l'absence d'une ligne de rétablissement de puissance commune selon une formule :

$$S\% = \frac{S'}{S} \times 100\%$$

où S est la charge de perte de puissance de la zone de rétablissement sur défaillance indépendante, et S' est la somme de la capacité de réserve des lignes de rétablissement de puissance indépendantes pour fournir de la puissance à la zone de rétablissement sur défaillance indépendante ;

6-2) réaliser un rétablissement de puissance sur les zones de rétablissement sur défaillance indépendantes une par une selon les coefficients de réserve de grand à petit ;

7) former un rétablissement de puissance pour les zones de rétablissement sur défaillance soumises à une unique défaillance à l'aide d'un procédé de restauration mono-défaillance.

**2.** Procédé de rétablissement de puissance pour le réseau de distribution de puissance ayant de multiples défaillances selon la revendication 1, dans lequel, à l'étape 3), le procédé spécifique pour diviser à nouveau des zones de rétablissement sur défaillance indépendantes est comme suit : après qu'une nouvelle défaillance se produit, l'aval de la nouvelle ligne de défaillance devient une nouvelle zone de rétablissement sur défaillance ; s'il y a des zones de rétablissement sur défaillance indépendantes connectées à la nouvelle zone de rétablissement sur défaillance par un commutateur de sectionnement, ces zones de rétablissement sur défaillance indépendantes et la nouvelle zone de rétablissement sur défaillance forment de nouvelles zones de rétablissement sur défaillance indépendantes.

**3.** Procédé de rétablissement de puissance pour le réseau de distribution de puissance ayant de multiples défaillances selon la revendication 1, dans lequel l'étape 6-2) comprend les étapes spécifiques suivantes :

a) réaliser un rétablissement de puissance sur les zones de rétablissement sur défaillance indépendantes à l'aide de lignes de rétablissement de puissance indépendantes ; lorsqu'un rétablissement de puissance est réalisé sur une certaine zone de rétablissement sur défaillance indépendante, si la fourniture de puissance à toutes les charges de perte de puissance est rétablie, la ligne de rétablissement de puissance commune ne participe plus au rétablissement de puissance des zones de rétablissement sur défaillance ; si la fourniture de puissance à toutes les charges de perte de puissance ne peut pas être rétablie, une ligne de rétablissement de puissance commune ayant la capacité de réserve la plus grande est ajoutée pour un nouveau rétablissement de puissance ; si la fourniture de puissance à toutes les charges de perte de puissance ne peut toujours pas être rétablie, une ligne de rétablissement de puissance commune est en outre ajoutée, jusqu'à ce que toutes les charges de perte de puissance soient rétablies ou qu'aucune ligne de rétablissement de puissance commune n'existe ;
b) transformer les lignes de rétablissement de puissance communes : après que le rétablissement de puissance d'une certaine zone de rétablissement sur défaillance indépendante est achevé, si certaines lignes de rétablissement de puissance communes connectées à la certaine zone de rétablissement sur défaillance indépendante fournissent uniquement de la puissance à une zone de rétablissement sur défaillance indépendante, ces lignes de rétablissement de puissance communes sont transformées en lignes de rétablissement de puissance indépendantes correspondantes pour la zone de rétablissement sur défaillance indépendante ; et si le taux de charge de la partie des lignes de rétablissement de puissance communes connectées à la certaine zone de rétablissement sur défaillance indépendante est supérieur au coefficient de réserve des zones de rétablissement sur défaillance indépendantes à rétablir connectées à ces lignes de rétablissement de puissance communes, la partie des lignes de rétablissement de puissance communes ne participe plus au rétablissement de puissance des zones de rétablissement sur défaillance indépendantes à rétablir.

```
                    ╱───────────────────╲
                    ⟨        start        ⟩
                    ╲───────────────────╱
                              │
                              ▼
              ┌───────────────────────────────┐
              │      detecting a new fault     │
              └───────────────────────────────┘
                              │
                              ▼
                    ╱───────────────────╲           N
                  ╱   whether there is a fault ╲───────────┐
                  ╲   not completely processed ╱           │
                    ╲───────────────────╱                  │
                              │ Y                           │
                              ▼                             │
              ┌───────────────────────────────┐            │
              │ stop executing a fault         │            │
              │ restoration solution not       │            │
              │ completely processed           │            │
              └───────────────────────────────┘            │
                              │◄───────────────────────────┘
                              ▼
              ┌───────────────────────────────┐
              │ turning on outlet circuit      │
              │ breakers for all fault lines   │
              └───────────────────────────────┘
                              │
                              ▼
              ┌───────────────────────────────┐
              │ re-dividing independent fault  │
              │ restoration areas              │
              └───────────────────────────────┘
                              │
                              ▼
              ┌───────────────────────────────┐
              │ determining common power       │
              │ restoration lines and          │
              │ independent power restoration  │
              │ lines for the independent      │
              │ fault restoration areas        │
              └───────────────────────────────┘
                              │
                              ▼
              ┌───────────────────────────────┐
              │    re-determining multi-faults │
              └───────────────────────────────┘
                              │◄───────────────────────────┐
                              ▼                             │
            N       ╱───────────────────╲                  │
         ┌────────╱   whether there are   ╲                │
         │        ╲   unprocessed multi-faults ╱           │
         │          ╲───────────────────╱                  │
         │                    │ Y                           │
         │                    ▼                             │
         │    ┌───────────────────────────────┐            │
         │    │ performing power restoration   │            │
         │    │ on the independent fault       │────────────┘
         │    │ restoration areas subjected to │
         │    │ multi-faults one by one        │
         │    └───────────────────────────────┘
         │                    │◄───────────────────────────┐
         │                    ▼                             │
         │  N     ╱───────────────────╲                     │
         ├──────╱   whether there are   ╲                   │
         │      ╲   unprocessed single-faults ╱             │
         │        ╲───────────────────╱                     │
         │                  │ Y                              │
         │                  ▼                                │
         │  ┌───────────────────────────────┐               │
         │  │ generating a power restoration │               │
         │  │ solution for the fault         │───────────────┘
         │  │ restoration area by using a    │
         │  │ single-fault restoration       │
         │  │ algorithm                      │
         │  └───────────────────────────────┘
         │                  │
         └──────────────────┤
                            ▼
                    ╱───────────────────╲
                   ⟨        end          ⟩
                    ╲───────────────────╱
```

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Service Restoration Methodology for Multiple Fault Case in Distribution Systems. **LIM et al.** IEEE TRANSACTIONS ON POWER SYSTEMS. IEEE SERVICE CENTER, 01 November 2006, vol. 21, 1638-1644